# EUROPEAN PATENT APPLICATION

(11) **EP 4 760 116 A1**
(43) Date of publication of application: **17.06.2026**
(21) Application number: 24220130.9
(22) Date of filing: 16.12.2024
(51) Int. Cl.: F16B 39/10

(54) **NUT CONNECTION ARRANGEMENT**

(71) Applicant: VBG Group AB (Publ), 461 34 Trollhättan (SE)
(72) Inventor: BOSTRÖM, Claes Henrik, 461 39 TROLLHÄTTAN (SE)
(74) Representative: Lind Edlund Kenamets Intellectual Property AB

(57) **Abstract**

The present invention relates to a nut connection arrangement (100) comprising: a threaded shaft (110) comprising a plurality of splines (112), a castellated nut (120) comprising a plurality of crenellation slots (122) and a locking member (130). The locking member comprising at least one radially inwardly extending protrusion (132) configured to engage a spline (112) and at least one radially outwardly extending protrusion (134) configured to engage a crenellation slot (122). The number and an angular distribution of the crenellation slots (122) and the splines (112) are such that, irrespective of a rotational position of the castellated nut (120) in relation to the shaft (110) when the castellated nut (120) is threaded onto the shaft (110), for at least one rotational position of the locking member (130), the locking member (130) is slidable onto the shaft (110) such that the at least one radially inwardly extending protrusion (132) and the at least one radially outwardly extending protrusion (134) engage with the splines (112) and the crenellation slots (122), respectively, thereby providing a rotational locking of the castellated nut (130) in relation to the shaft (110). A truck coupling (10), a draw beam arrangement (11), a truck (1) and a method (200) for rotationally locking a castellated nut (120) in relation to a threaded shaft (110) are also provided.

## Description

### Technical Field

The invention relates to the field locking of a nut in relation to a threaded shaft. More particularly, it is related to a nut connection arrangement comprising a threaded shaft and a castellated nut configured to be threaded onto the shaft. A truck coupling comprising such a nut connection arrangement, a draw beam arrangement comprising a draw beam and such a truck coupling are also disclosed, as well as a truck comprising such a truck coupling or such a draw beam arrangement. A method for rotationally locking a castellated nut in relation to a threaded shaft using such a nut connection arrangement is also disclosed.

### Background

In various mechanical assemblies, threaded fasteners such as bolts and nuts are widely used to secure components together. However, in many applications, ensuring the rotational immovability of a nut is critical to maintaining the integrity of the assembly under dynamic loads, vibrations, or thermal expansion. Uncontrolled rotation or loosening of the nut can result in mechanical failure, compromised safety, or the need for frequent maintenance.

One common method of rotationally locking a nut involves the use of a castellated or slotted nut in combination with a split pin. In this arrangement, the nut features a series of notches or slots around its periphery, allowing the split pin to be inserted through a transverse hole in a bolt and aligned with a corresponding slot in the nut. This configuration mechanically prevents the nut from rotating.

While this method effectively prevents rotation, multiple time-consuming adjustments for reaching the necessary alignment between the notches in the nut and the hole in the bolt are often times needed. Moreover, the method introduces limitations when specific torque values are required, e.g. for optimal performance or for safety reasons. The alignment necessary between the notches in the nut and the hole in the bolt often prevents achieving a precise torque setting. Instead, the nut must be tightened or loosened to align the notches with the bolt hole, in practice resulting in a torque value that is either too high or too low. For instance, when a nut having ten notches is combined with a bolt having two transverse holes the nut may have to be rotated as much as 18 degrees in order to align a hole in the bolt with a notch in the nut. This means that the nut may have to be loosened or tightened up to 18 degrees in order to be locked by the split pin. However, the situation may be even worse if the nut has fewer notches or if the bolt has a single transverse hole. For instance, when a nut having eight notches is combined with a bolt having a single transverse hole the nut may have to be rotated as much as 45 degrees in order to align the hole in the bolt with a notch in the nut.

In this regard, an excess torque can overstress the nut and the bolt. Moreover, the assembly at hand may be deformed or damaged. Correspondingly, an insufficient torque may compromise joint integrity, leading to loosening or failure of the bolt and nut under operational conditions, such as under dynamic load conditions.

In many cases a specific minimum torque is required. In such cases, the nut cannot be loosened to align the align the notches with the bolt hole, meaning that the nut inevitable will have to be tightened if the notches do not happen to align with the bolt hole when the specific minimum torque is applied.

In heavy duty applications such additional torque needed to align the notches with the bolt hole may amount more than 1400 Nm, not only risking overstressing the nut and the bolt, but also making it hard and sometimes even impossible to tighten the nut to align the notches with the bolt hole. In this regard, many workshops encounters problems even achieving the high torques required.

The above drawbacks highlight the need for improved locking mechanisms or methods that allow precise torque application while maintaining the rotational locking functionality, addressing both safety and performance requirements in demanding mechanical environments.

### Summary

With the above in mind, it is an objective of the present invention to provide an improved nut connection arrangement, as well as truck coupling, a draw beam arrangement and truck. Another objective is to provide a method for rotationally locking a castellated nut in relation to a threaded shaft.

Another objective is to provide such a nut connection arrangement by which a castellated may be locked in relation to a threaded shaft irrespective of a rotational position of the castellated nut in relation to the shaft.

Another objective is to provide such a nut connection arrangement which is capable of withstanding high torques.

Another objective is to provide such a nut connection arrangement which is capable of withstanding high rotational forces.

Another objective is to provide such a nut connection arrangement which is easier to mount.

Another objective is to provide such a nut connection arrangement which is quicker to mount.

Another objective is to provide such a nut connection arrangement which is less labor-intensive.

Another objective is to provide such a nut connection arrangement which is more cost-effective.

To achieve at least one of the above objects and also other objects that will be evident from the following description, a nut connection arrangement, having the features defined in claim 1 is provided according to the present inventive concept.

More specifically, according to a first aspect, there is provided a nut connection arrangement comprising: a threaded shaft comprising a plurality of splines extending along a longitudinal axis of the shaft, a castellated nut comprising a plurality of crenellation slots and being configured to be threaded onto the shaft from an end of the shaft, and a locking member comprising at least one radially inwardly extending protrusion configured to engage a spline in response to sliding the locking member onto the shaft from the end of the shaft, and at least one radially outwardly extending protrusion configured to engage a crenellation slot in response to sliding the locking member onto the shaft from the end of the shaft when the castellated nut is threaded onto the shaft, wherein a number and an angular distribution of the crenellation slots and the splines are such that, irrespective of a rotational position of the castellated nut in relation to the shaft when the castellated nut is threaded onto the shaft, for at least one rotational position of the locking member, the locking member is slidable onto the shaft such that the at least one radially inwardly extending protrusion and the at least one radially outwardly extending protrusion engage with the splines and the crenellation slots, respectively, thereby providing a rotational locking of the castellated nut in relation to the shaft.

Hereby an improved a nut connection arrangement is provided.

The nut connection arrangement may be used throughout a wide range of applications. In practice, the nut connection arrangement may be used in virtually any application where a nut is to be rotationally locked or fixed in relation to a threaded shaft, such as a bolt or screw. However, the nut connection arrangement is particularly useful in heavy duty applications where large torques are involved.

For example, the nut connection arrangement may be used to connect a coupling to a towing vehicle. As another example, the nut connection arrangement may be used to connect a truck coupling to a truck or to a draw beam which in turn may be connected to a truck.

The present invention is based on the realization that by providing a purpose designed combination of a threaded shaft comprising a plurality of splines, a castellated nut comprising a plurality of crenellation slots, and a locking member comprising at least one radially inwardly extending protrusion configured to engage a spline and at least one radially outwardly extending protrusion configured to engage a crenellation slot, there will be, irrespective of a rotational position of the castellated nut in relation to the shaft when the castellated nut is threaded onto the shaft, at least one rotational position of the locking member, in which the locking member is slidable onto the shaft such that the at least one radially inwardly extending protrusion and the at least one radially outwardly extending protrusion engage with the splines and the crenellation slots, respectively, thereby providing a rotational locking of the castellated nut in relation to the shaft. The above effect of rotationally locking the castellated nut in relation to the shaft irrespective of a rotational position of the castellated nut in relation to the shaft is attributable to the number and an angular distribution of the crenellation slots and the splines.

This means that the castellated nut or nut may, irrespective of its rotational position, be rotationally locked in relation to the threaded shaft by means of the locking member. As a result, the nut may be tightened with a desired torque and rationally locked. In other words, the nut may be tightened with a desired torque and rationally locked without any need for loosening or tightening the nut in order for the nut to end up in a rotational position in which it may be rotationally locked.

More specifically, by the nut connection arrangement comprising a threaded shaft comprising a plurality of splines extending along a longitudinal axis of the shaft, the castellated nut may be threaded onto the shaft from an end of the shaft. At the same time, the locking member may be slid onto the threaded shaft from the end of the shaft while the at least one radially inwardly extending protrusion of the locking member engages a spline. As a result, the locking member may be slid onto the shaft in a number or rotational positions, where the number of rotational positions correspond to the number of splines. In other words, the locking member may be slid onto the threaded shaft in a rotational position for each spline.

Hence, by "rotational position" is here meant a rotational position or orientation about a central axis of the shaft in which the locking member may be slid onto the shaft such that the at least one radially inwardly extending protrusion engages a spline. According to an example, if the threaded shaft comprises ten splines and the least one radially inwardly extending protrusion is a single radially inwardly extending protrusion, there will be ten rotational positions of the locking member, wherein the single radially inwardly extending protrusion engages a different spline in each one of the ten rotational positions. According to another example, if the threaded shaft comprises ten splines and the least one radially inwardly extending protrusion is ten radially inwardly extending protrusions, there will still be ten rotational positions of the locking member, wherein a radially inwardly extending protrusion (of the ten radially inwardly extending protrusions) engages a different spline in each one of the ten rotational positions.

By the castellated nut comprising a plurality of crenellation slots, the plurality of crenellation slots may be engaged by the at least one radially outwardly extending protrusion of the locking member in response to sliding the locking member onto the shaft from the end of the shaft when the castellated nut is threaded onto the shaft.

It is to be noted that the wording "castellated nut" is here meant any type of nut which is provided with notches, slots or similar cut into one end, or which is provided with protrusions so as to form notches, slots or similar therebetween. Thus, the castellated nut may also be referred to as a castle nut, a slotted nut, a split-pin nut, a cotter-pin nut, a notched nut, a locking slotted nut or a slotted locking nut to give a few non-limiting examples.

It is to be noted that the wording "crenellation slot" is here meant any type of slot, notch or similar which is cut into one end or the castellated nut, or any type of slot, notch or similar which is formed between protrusions or similar at one end or the castellated nut.

By the number and an angular distribution of the crenellation slots and the splines being such that, irrespective of a rotational position of the castellated nut in relation to the shaft when the castellated nut is threaded onto the shaft, for at least one rotational position of the locking member, the locking member is slidable onto the shaft such that the at least one radially inwardly extending protrusion and the at least one radially outwardly extending protrusion engage with the splines and the crenellation slots, respectively, a rotational locking of the castellated nut in relation to the shaft may be achieved irrespective of a rotational position of the castellated nut in relation to the shaft when the castellated nut is threaded onto the shaft. In other words, a rotational locking of the castellated nut in relation to the shaft may be achieved irrespective of a rotational position of the castellated nut in relation to the shaft by sliding the locking member onto the shaft from the end of the shaft in a correct rotational position (of the rotational positions) corresponding to said at least one rotational position of the locking member, i.e. the at least one rotational position of the locking member in which the locking member is slidable onto the shaft such that the at least one radially inwardly extending protrusion and the at least one radially outwardly extending protrusion engage with the splines and the crenellation slots, respectively.

By "rotational locking" the castellated nut in relation to the shaft is here meant that the castellated nut is prevented or counteracted from rotating in relation to the shaft in the sense that the nut may not be de-threaded from the shaft. Thus, the castellated nut may be rotatable in relation to the shaft over a small angle while still being rotationally locked in relation to the shaft. In other words, the castellated nut may be rotatable in relation to the shaft over a small angle before the locking member prevents any further rotation of the castellated nut in relation to the shaft.

The number of the crenellation slots may not be evenly divisible by the number of splines. Thus, the number of crenellation slots and splines may not be the same. Moreover, the number of crenellation slots may not be a multiple of the number of splines or vice versa. As a result, an angular displacement may exist between the crenellation slots and the splines.

The plurality of crenellation slots may be evenly distributed about a circumference of the castellated nut, and the plurality of splines may be evenly distributed about a circumference of the shaft, which is advantageous in that an evenly distributed or symmetric angular displacement will exist between the crenellation slots and the splines. This has the advantage of that the at least one radially outwardly extending protrusion will, for each rotational position of the locking member, be located differently in relation to a nearest crenellation slot, resulting in that there will be the at least one rotational position of the locking member in which the locking member is slidable onto the shaft such that the at least one radially inwardly extending protrusion and the at least one radially outwardly extending protrusion engage with the splines and the crenellation slots, respectively, thereby providing the rotational locking of the castellated nut in relation to the shaft.

The plurality of crenellation slots may be evenly distributed about a circumference of the castellated nut.

The plurality of splines may be evenly distributed about a circumference of the shaft.

The at least one rotational position of the locking member may be associated with an angular play within a range of 3,5 to 9 degrees, such as 4 to 6 degrees. By the at least one rotational position being associated with an angular play within a range of 3,5 to 9 degrees, such as 4 to 6 degrees, the locking member may be slidable onto the shaft such that the at least one radially inwardly extending protrusion and the at least one radially outwardly extending protrusion engage with the splines and the crenellation slots, respectively, within an angular range of 3,5 to 9 degrees. In other words, the locking member may be slidable onto the shaft such that the at least one radially inwardly extending protrusion and the at least one radially outwardly extending protrusion engage with the splines and the crenellation slots, respectively, although the at least one radially inwardly extending protrusion and/or the at least one radially outwardly extending protrusion do not perfectly align a spline and a crenelation slot, respectively. To this end, the angular play may be attributable to a circumferential play or clearance between the at least one radially inwardly extending protrusion and the splines and/or to a circumferential play or clearance between the that the at least one radially outwardly extending protrusion and the crenellation slots. In other words, the angular play may be attributable to a circumferential play or clearance between the that the at least one radially inwardly extending protrusion and the splines, and to a circumferential play or clearance between the that the at least one radially outwardly extending protrusion and the crenellation slots, either jointly or individually. In yet other words, the angular play may be attributable to a circumferential play or clearance between the that the at least one radially inwardly extending protrusion and the splines, to a circumferential play or clearance between the that the radially outwardly extending protrusion and the crenellation slots, or to a combination of said circumferential plays or clearances. Further, the locking member being associated with an angular play within a range of 3,5 to 9 degrees, such as 4 to 6 degrees, a plurality of numbers and an angular distributions of the crenellation slots and the splines may be accounted for.

The at least one inwardly extending protrusion may have a smaller circumferential dimension than the splines such that an inner circumferential clearance is formed between the at least one inwardly extending protrusion and the splines when the at least one inwardly extending protrusion engages the splines, and/or the at least one outwardly extending protrusion may have a smaller circumferential dimension than the crenellation slots such that an outer circumferential clearance is formed between the at least one outwardly extending protrusion and the crenellation slots when the at least one outwardly extending protrusion engages the crenellation slots. In this way, an angular play of the above described kind may be provided.

The at least one radially inwardly extending protrusion may comprise a plurality of inwardly extending protrusions, and the at least one radially outwardly extending protrusion may comprise a plurality of outwardly extending protrusions, which is advantageous in that the nut connection arrangement may be made stronger in the sense that it may handle an increased rotational torque. As an example, the locking member may handle an increased rotational torque as compared to when a single inwardly extending protrusion and a single outwardly extending protrusion is used.

The at least one radially inwardly extending protrusion may comprise a plurality of inwardly extending protrusions.

The at least one radially outwardly extending protrusion may comprise a plurality of outwardly extending protrusions.

A number of the at least one radially inwardly extending protrusion may equal to the number of the plurality of splines, which is advantageous in that the nut connection arrangement may be made stronger in the sense that it may handle an increased rotational torque.

A number of the at least one radially outwardly extending protrusion may equal to the number of the plurality of crenellation slots, which is advantageous in that the nut connection arrangement may be made stronger in the sense that it may handle an increased rotational torque.

The shaft may comprise seven splines and the castellated nut may comprise ten crenellation slots, or the shaft may comprise ten splines and the castellated nut may comprise seven crenelation slots, or the shaft may comprise nine splines and the castellated nut may comprise ten crenellation slots, or the shaft may comprise ten splines and the castellated nut may comprise nine crenelation slots, or the shaft may comprise nine splines and the castellated nut may comprise eight crenellation slots, or the shaft may comprise eight splines and the castellated nut may comprise nine crenellation slots, or the shaft may comprise eleven splines and the castellated nut may comprise eight crenellation slots, or the shaft may comprise eight splines and the castellated nut may comprise eleven crenellation slots, or the shaft may comprise eleven splines and the castellated nut may comprise six crenellation slots, or the shaft may comprise six splines and the castellated nut may comprise eleven crenellation slots, or the shaft may comprise nine splines and the castellated nut may comprise seven crenellation slots, or the shaft may comprise seven splines and the castellated nut may comprise nine crenellation slots, or the shaft may comprise eight splines and the castellated nut may comprise seven crenellation slots, or the shaft may comprise seven splines and the castellated nut may comprise eight crenellation slots, or the shaft may comprise eleven splines and the castellated nut may comprise seven crenellation slots, or the shaft may comprise seven splines and the castellated nut may comprise eleven crenellation slots, or the shaft may comprise eleven splines and the castellated nut may comprise ten crenellation slots, or the shaft may comprise ten splines and the castellated nut may comprise eleven crenellation slots, or the shaft may comprise seven splines and the castellated nut may comprise six crenellation slots, or the shaft may comprise six splines and the castellated nut may comprise seven crenellation slots, or the shaft may comprise eleven splines and the castellated nut may comprise nine crenellation slots, or the shaft may comprise nine splines and the castellated nut may comprise eleven crenellation slots.

The shaft may comprise seven splines and the castellated nut may comprise ten crenellation slots.

The shaft may comprise ten splines and the castellated nut may comprise seven crenelation slots.

The shaft may comprise nine splines and the castellated nut may comprise ten crenellation slots.

The shaft may comprise ten splines and the castellated nut may comprise nine crenelation slots.

The nut connection arrangement may further comprise a fixing member configured to retain the locking member in a position in which the at least one radially inwardly extending protrusion and the at least one radially outwardly extending protrusion engage with the splines and the crenellation slots, respectively, which is advantageous in the locking member may be prevented or counteracted from unintentionally de-engaging the splines and the crenellation slots. Thus, in this way, the nut connection arrangement may be made safer and less prone to failure.

The fixing member may comprise a locking ring configured to engage a circumferentially extending groove of the shaft, or the fixing member may comprises a locking pin configured to engage a transversally extending bore of the shaft, which is advantageous in that the locking member may be retained in the position in which the at least one radially inwardly extending protrusion and the at least one radially outwardly extending protrusion engage with the splines and the crenellation slots, respectively, in a simple and yet secure manner.

According to a second aspect there is provided a truck coupling, wherein the truck coupling comprises a nut connection arrangement according to the first aspect for connecting the truck coupling to a truck. By the truck coupling comprising a nut connection arrangement of the above described kind, the truck coupling may be connected to a truck in a secure manner where the castellated nut may be threaded onto the shaft and tightened with a desired rotational torque and subsequently rotationally locked in relation to the shaft. A further advantage resides in that the truck coupling may more easily be connected to or disconnected from a truck using hand tool, since the need for tightening the castellated nut with an excess torque or additional torques may be eliminated. To eliminate the need for tightening the castellated nut with an additional torque is generally particularly advantageous in heavy duty applications, such as in truck couplings. According to an example, in a state of the art heavy duty truck coupling an additional torque of more than 1400 Nm may be needed to align the notches of a castellated nut with a hole in an axis when utilizing a state of the art nut locking technique including a split pint.

It is to be noted that the wording "truck" is here meant to encompass any type of towing vehicle, such as a tractor, an excavator, a lorry, a dumper, a van or similar.

In general, features of the second aspect provide similar advantages as discussed above in relation to the first aspect. Consequently, said advantages will not be repeated in order to avoid undue repetition.

According to a third aspect there is provided a draw beam arrangement comprising: a draw beam configured to be connected to a truck, and a truck coupling, wherein the truck coupling comprises a nut connection arrangement according to the first aspect connecting the truck coupling to the draw beam.

In general, features of the third aspect provide similar advantages as discussed above in relation to the first and second aspects. Consequently, said advantages will not be repeated in order to avoid undue repetition.

According to a fourth aspect there is provided a truck comprising a truck coupling according to the second aspect or a draw beam arrangement according to the third aspect.

In general, features of the fourth aspect provide similar advantages as discussed above in relation to the first, second and third aspects. Consequently, said advantages will not be repeated in order to avoid undue repetition.

According to a fifth aspect there is provided a method for rotationally locking a castellated nut in relation to a threaded shaft using a nut connection arrangement according to the first aspect, the method comprising: threading the castellated nut onto the shaft, and sliding the locking member onto the shaft such that the at least one radially inwardly extending protrusion and the at least one radially outwardly extending protrusion engage with the splines and the crenellation slots, respectively, thereby providing a rotational locking of the castellated nut in relation to the shaft.

In general, features of the fifth aspect provide similar advantages as discussed above in relation to the first, second, third and fourth aspects. Consequently, said advantages will not be repeated in order to avoid undue repetition.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for the purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Thus, throughout this specification, unless the context requires otherwise, the word "comprise" or variations such as "comprises" or "comprising", will be understood to imply the inclusion of a stated integer or group of integers but not the exclusion of any other integer or group of integers.

### Brief Description of the Drawings

The above and other aspects of the present inventive concept will now be described in more detail, with reference to appended figures showing embodiments or variants of the inventive concept. The figures should not be considered limiting, instead, they are used for explaining and understanding.

As illustrated in the figures, the sizes of details, layers and regions may be exaggerated for illustrative purposes and, thus, are provided to illustrate the general structures of variants. Like reference numerals refer to like elements throughout.
Fig. 1 is a schematic perspective view of a nut connection arrangement.
Fig. 2 is a schematic cross sectional view of the nut connection arrangement of Fig. 1.
Fig. 3 is a schematic top view of the nut connection arrangement of Fig. 1.
Fig. 4 is a schematic top view of a nut connection arrangement similar to the nut connection arrangement of Fig. 1.
Fig. 5 is a schematic perspective view of a trailer coupling including a nut connection arrangement.
Fig. 6 is a perspective view of a rear section of a truck having a trailer coupling attached via a draw beam.
Figs. 7a-7k schematically illustrate various configurations of crenellation slots and splines.
Fig. 8 is a schematic top view of a nut connection arrangement similar to the one of Fig. 1 in which the locking member has a different design.
Fig. 9 is a flow scheme of a method for rotationally locking a castellated nut in relation to a threaded shaft.

### Detailed Description

The present inventive concept will now be described more fully hereinafter with reference to the accompanying drawings, in which currently preferred variants or embodiments of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

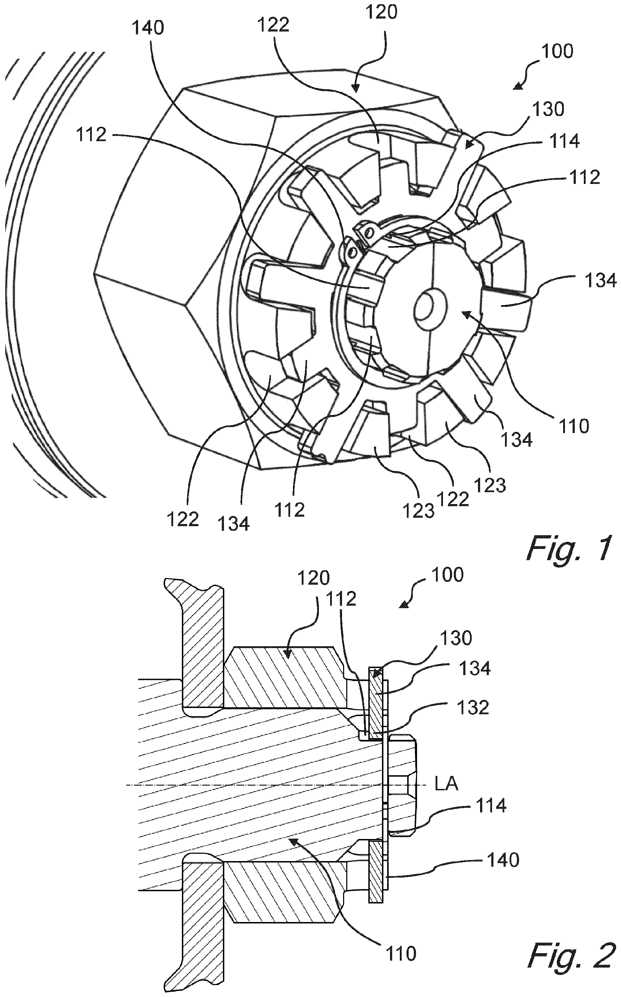

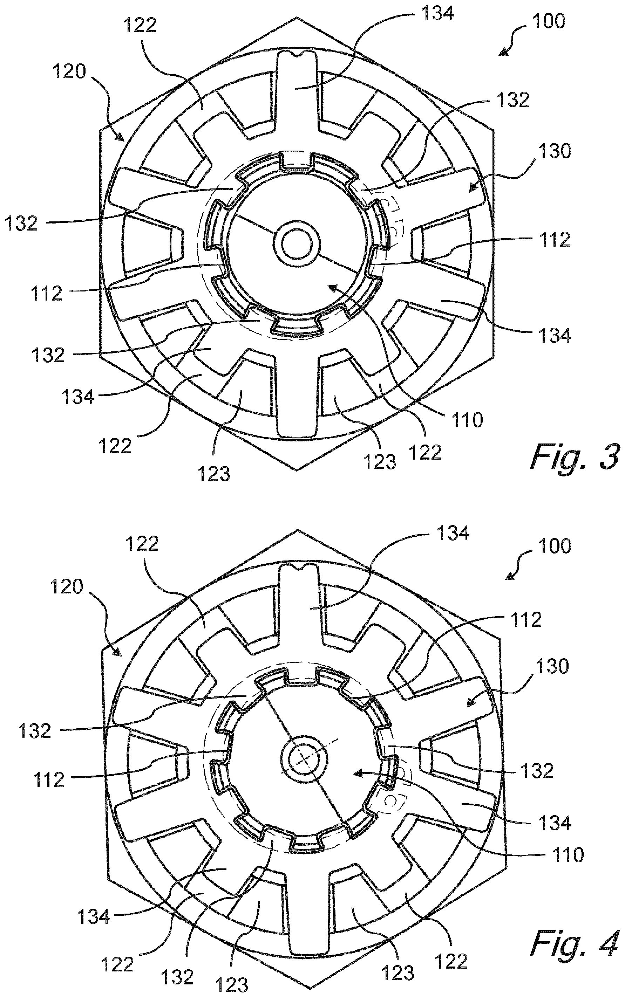

Now referring to Figs. 1-3. Fig. 1 illustrates by way of example a perspective view of a nut connection arrangement 100. Fig. 2 illustrates by way of example a cross sectional view of the nut connection arrangement 100 of Fig. 1. Fig. 3 illustrates by way of example a top view of the nut connection arrangement 100 of Figs. 1 and 2.

The nut connection arrangement 100 comprises a purpose designed combination of a threaded shaft 110, a castellated nut 120, and a locking member 130.

The threaded shaft 110 or shaft 110 comprises a plurality of splines 112. The splines 112 extend along a longitudinal axis LA of the shaft 110. In the depicted variant of Figs. 1-3, the shaft 110 comprises seven splines 112. Moreover, the shaft 110 comprises a thread by means of which the castellated nut 120 or nut 120 may be threaded onto the shaft. 110. The thread as such is not illustrated in Figs. 1-3 to increase the legibility of the Figs.

The shaft 110 may typically be made of metal although other materials are conceivable. For instance, the shaft 110 may form part of a forged component. In such a case, the forged component may have been subjected to turning or milling to form the final shape of the shaft 110. The shaft 110 has typically thereafter been subjected to a thread formation process such that the shaft 110 becomes threaded. In practice, only a portion of the shaft 110 may be threaded. The shaft 110 has typically also been subjected to a spline formation process such that a plurality of splines 112 extending along the longitudinal axis LA of the shaft 110 are provided in the shaft 110. Moreover, the shaft 110 may have been subjected to a hardening process, such as induction hardening, to increase its material strength and/or durability.

The castellated nut 120 comprises a plurality of crenellation slots 122 or slots 122. Further, the nut 120 is configured to be threaded onto the shaft 110 from an end of the shaft 110, In Figs. 1-3 the castellated nut 120 is illustrated as being threaded onto the shaft 110. In the depicted variant of Figs. 1-3, the nut 120 comprises ten slots 122.

Each slot 122 may be formed between a pair protrusions 123 of the nut 120. Such protrusions 123 may typically be integrally formed with the nut 120. The slots 122 may be cut into the nut 120. The slots 122 may be formed by a forging process. The slots 122 may be formed by welding protrusions 123 onto a nut of standard type. The nut 120 may typically be made of metal although other materials are conceivable.

The depicted locking member 130 of Figs. 1-3 comprises seven radially inwardly extending protrusions 132. Each radially inwardly extending protrusion 132 is configured to engage a spline 112 in response to sliding the locking member 130 onto the shaft 110 from the end of the shaft. That is, the depicted locking member 130 of Figs. 1-3 comprises a radially inwardly extending protrusion 132 for each spline 112 of the shaft 110. In other words, in the depicted nut connection arrangement 100 of Figs. 1-3 the number of radially inwardly extending protrusions 132 equals to the number of the plurality of splines 112.

Further, the depicted locking member 130 of Figs. 1-3 comprises ten radially outwardly extending protrusions 134. Each radially outwardly extending protrusion 134 is configured to engage a crenellation slot 122 in response to sliding the locking member 130 onto the shaft 110 from the end of the shaft 110 when the castellated nut 120 is threaded onto the shaft 110. Thus, the when the nut 120 is threaded onto the shaft 110 as depicted in Figs. 1-3, the locking member 130 may be slid onto the shaft 110 from the end of the shaft, such that the inwardly extending protrusions 132 engage the splines 112, and such that the outwardly extending protrusions 134 engage the crenellation slots 122, i.e. as depicted in Figs. 1-3. The depicted locking member 130 of Figs. 1-3 comprises a radially outwardly extending protrusion 134 for each slot 122 of the nut 120. In other words, in the depicted nut connection arrangement 100 of Figs. 1-3 the number of radially outwardly extending protrusions 134 equals to the number of the plurality of slots 122.

The locking member 130 may typically be made of metal although other materials are conceivable. The locking member may typically be integrally formed. However, the locking member 130 may be formed by joining more than one components together.

In the depicted nut connection arrangement 100 of Figs. 1-3, the number of the crenellation slots 122 is not evenly divisible by the number of splines 112. That is, ten is not evenly divisible by seven. By the number of the crenellation slots 122 not being evenly divisible by the number of splines 112, there will be an angular displacement between the crenellation slots 122 and the splines 112 as clearly illustrated in Fig. 3.

Further In the depicted nut connection arrangement 100 of Figs. 1-3, the plurality of crenellation slots 122 (the ten slots 122) are evenly distributed about a circumference of the castellated nut 120. Moreover, the plurality of splines 112 (the seven splines 112) are evenly distributed about a circumference of the shaft 110. As a result, there will be a symmetric angular displacement between the crenellation slots 122 and the splines 112 as best illustrated in Fig. 3.

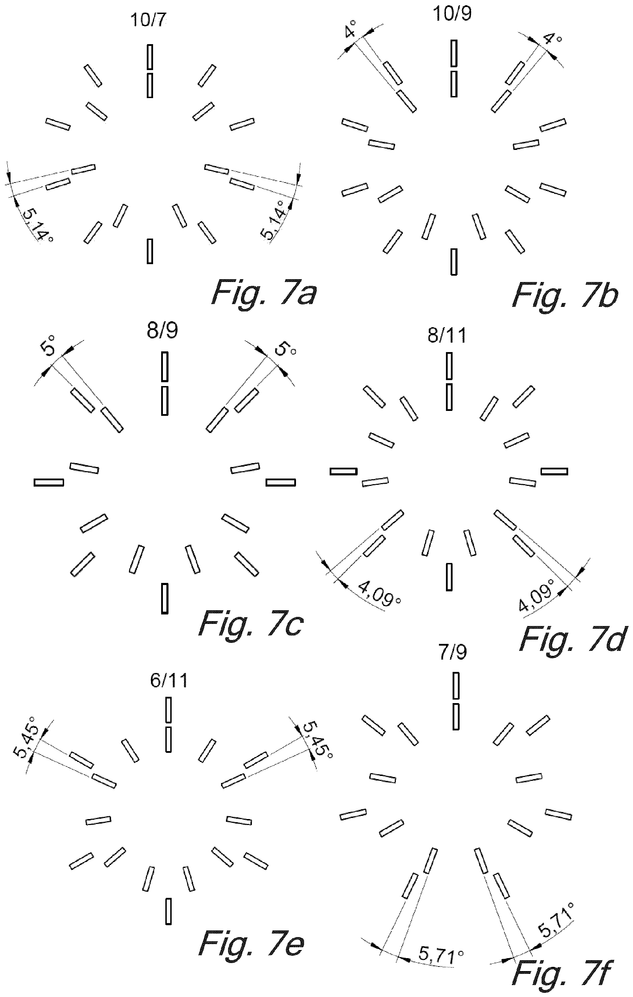

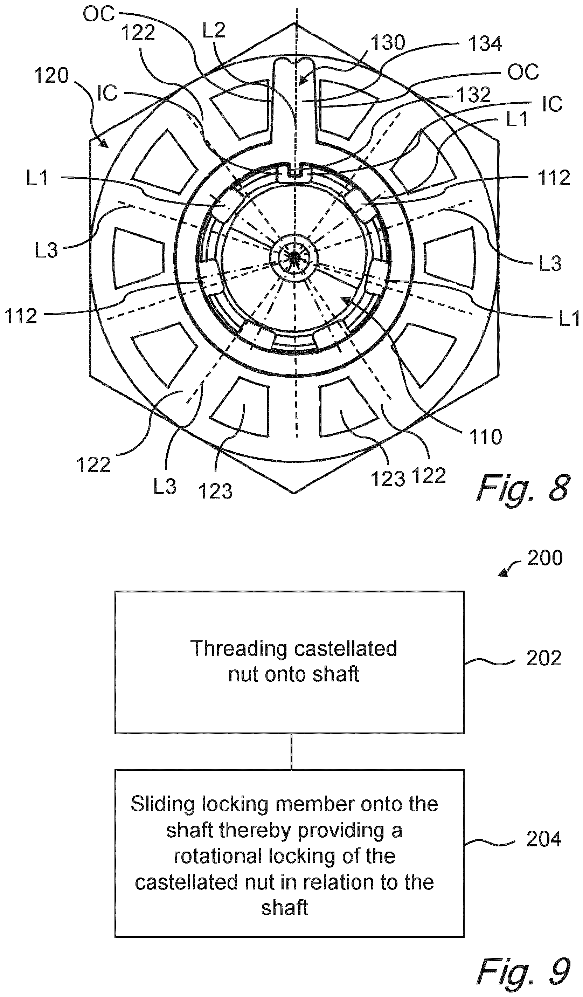

The angular displacement obtained by the above described configuration of the crenellation slots 122 and the splines 112 will be described in greater detail further below while referring to Fig. 7a and 8.

Now also turning to Fig. 8. It is to be noted that the locking member 130 may equally well comprise a single radially inwardly extending protrusion 132 configured to engage a spline 112 in response to sliding the locking member 130 onto the shaft 110 from the end of the shaft, i.e. as depicted in Fig. 8.

Correspondingly, It is to be noted that the locking member 130 may equally well comprise a single radially outwardly extending protrusion 134 configured to engage a crenellation slot 122 in response to sliding the locking member 130 onto the shaft from the end of the shaft when the castellated nut 120 is threaded onto the shaft 110, i.e. as depicted in Fig. 8.

Thus, a locking member 130 having the design depicted in Fig. 8 may be formed while utilizing less material as compared to when forming the locking member 130 of Figs. 1-3. However, since the locking member 130 having the design depicted in Fig. 8 engages a single spline 112 and a single slot 122, the locking member 130 may not be capable of withstanding as high rotational torque as the locking member of Figs. 1-3 before being deformed or breaking. It is, however, to be understood that a locking member 130 having the design depicted in Fig. 8 may be made more torque resistant by forming it from a thicker material. Of course, the same holds true for the locking member 130 of Figs. 1-3. This because a thicker material in the locking member 130 will make the locking member 130 as such stronger and sturdier. At the same time, the contact surfaces between the inwardly extending protrusions 132 and the splines 112, as well as the contact surfaces between the radially outwardly extending protrusions 134 and the crenellation slots 122 will become larger. As is well known, increased contact surfaces reduces the strain the contact surfaces are subjected to, hence increasing the overall strength of the nut connection arrangement 100.

It is further to be noted that the locking member 130 may comprise any number between one the number of splines 112 of radially inwardly extending protrusions 132 configured to engage a spline 112 in response to sliding the locking member 130 onto the shaft 110 from the end of the shaft 110. In other words, the locking member 130 may comprise at least one radially inwardly extending protrusion 132 configured to engage a spline 112 in response to sliding the locking member 130 onto the shaft 110 from the end of the shaft 110.

It is further to be noted that the locking member 130 may comprise any number between one the number of slots 122 of radially outwardly extending protrusions 134 configured to engage a slot 122 in response to sliding the locking member 130 onto the shaft 110 from the end of the shaft 110. In other words, the locking member 130 may comprise at least one radially outwardly extending protrusion 134 configured to engage a slot 122 in response to sliding the locking member 130 onto the shaft 110 from the end of the shaft 110 when the castellated nut 120 is threaded onto the shaft 110.

A major crux with the above described purpose designed combination of the threaded shaft 110, the castellated nut 120, and the locking member 130 is the number and the angular distribution of the crenellation slots 122 and the splines 112. More specifically the number and the angular distribution of the crenellation slots 122 and the splines 112 are such that, irrespective of a rotational position of the castellated nut 120 in relation to the shaft 110 when the castellated nut 120 is threaded onto the shaft 110, for at least one rotational position of the locking member 130, the locking member 130 is slidable onto the shaft 110 such that the at least one radially inwardly extending protrusion 132 and the at least one radially outwardly extending protrusion 134 engage with the splines 112 and the crenellation slots 122, respectively. Thus, by the dual engagement of the at least one radially inwardly extending protrusion 132 and the splines 112, and the at least one radially outwardly extending protrusion 134 and the slots 122 a rotational locking of the of the castellated nut 130 in relation to the shaft 110 is provided via the locking member 130.

Further, in this regard, a rotational position refers to position or orientation about the longitudinal axis LA of the shaft in which the locking member 130 may be slid onto the shaft 110 such that the at least one radially inwardly extending protrusion 132 engages a spline 112. This means in practice, that that in the depicted nut connection arrangements 100 of Figs. 1-3 and 8 the number of rotational positions of the locking member 130 equals to the number of the plurality of splines 112. Thus, the locking members 130 of the depicted nut connection arrangements 100 of Figs. 1-3 and 8 each have seven rotational positions.

As is clearly illustrated in Fig. 3, the locking member 130 will only be slidable onto the shaft 110 such that the that the seven radially inwardly extending protrusions 132 and the ten radially outwardly extending protrusions 134 engage with the splines 112 and the crenellation slots 122, respectively, when in the depicted rotational position. In any other rotational position (of the seven possible rotational positions) the locking member 130 will only be slidable onto the shaft 110 until the radially outwardly extending protrusions 134 hits the top of the protrusions 123 such that there will be no engagement between the radially outwardly extending protrusions 134 and the slots 122. In other words, there will only be a single engagement between the radially inwardly extending protrusions 132 and the splines 112 (in any other rotational position than the depicted one). As a result, there will be no rotational locking of the of the castellated nut 130 in relation to the shaft 110 (in any other rotational position than the depicted one) since the nut 120 may still be rotated in relation to the locking member 130 and hence in relation to the shaft 110.

Correspondingly, as is clearly illustrated in Fig. 8, the locking member 130 will only be slidable onto the shaft 110 such that the that the single radially inwardly extending protrusion 132 and the single radially outwardly extending protrusion 134 engage with a spline 112 and a crenellation slot 122, respectively, when in the depicted rotational position. In any other rotational position (of the seven possible rotational positions) the locking member 130 will only be slidable onto the shaft 110 until the single radially outwardly extending protrusion 134 hits the top of a protrusion 123 such that there will be no engagement between the single radially outwardly extending protrusion 134 and a slot 122. In other words, there will only be a single engagement between the single radially inwardly extending protrusion 132 and a spline 112 (in any other rotational position than the depicted one). As a result, there will be no rotational locking of the of the castellated nut 130 in relation to the shaft 110 (in any other rotational position than the depicted one) since the nut 120 may still be rotated in relation to the locking member 130 and hence in relation to the shaft 110.

In Fig. 8, the angular distribution of the splines 112 is indicated by a dotted line L1 for each spline 112, except for the uppermost spline 112 (at twelve o'clock) which is jointly indicated with the uppermost slot 122 by a fine dashed line L2. Correspondingly, the angular distribution of the slots 122 is indicated by a dashed line L3 for each slot 122, except for the uppermost slot 122 (at twelve o'clock) which is jointly indicated with the uppermost slot 122 by the fine dashed line L2. As is clear from Fig. 8, there is an angular displacement between the crenellation slots 122 and the splines 112. In other words, the lines L1 and L3 do not align with each other in Fig. 8. It is further clear from Fig. 8 that the angular displacement between the crenellation slots 122 and the splines 112 is symmetric with respect to line L1 where the uppermost slot 122 aligns with the uppermost spline (at twelve o'clock).

Now referring to Figs. 7a and 8. Fig. 7a is a schematic representation illustrating the above described configuration of the nut connection arrangement 100 in which the nut 130 comprises ten slots 122 and the shaft 110 comprises seven splines 112, in short referred to as 10/7 at the top of Fig. 7a. That is, Fig. 7a is a schematic representation illustrating the configuration of the nut connection arrangement 100 in Figs 1-3 and 8 in which the nut 130 comprises ten slots 122 and the shaft 110 comprises seven splines 112. Further, Fig. 7a illustrates a situation where the uppermost slot 122 aligns with the uppermost spline 112 (at twelve o'clock), i.e. the same situation as is illustrated in Figs. 1-3 and 8.

Fig. 7a further indicates the smallest angular displacement between a slot 122 and a spline 112 apart from the aligned slot 122 and spline 112 at twelve o'clock. Thus, for the particular configuration in which the nut 130 comprises ten slots 122 and the shaft 110 comprises seven splines 112 (the 10/7 configuration) the smallest the smallest angular displacement between a slot 122 and a spline 112 apart from the aligned slot 122 and spline 112 is 5,14 degrees. The actual value of 5.14 degrees is attributable to the specific 10/7 configuration given that the crenellation slots 122 are evenly distributed about the circumference of the castellated nut 120, and that the splines 112 are evenly distributed about a circumference of the shaft 110. As a result, if the nut 120 is rotated 5,14 degrees in either direction (clockwise or counterclockwise) a different pair of a slot 122 and a spline 112 will be in alignment. As is clear from Fig. 7a, a clockwise rotation of 5,14 degrees will result in that the spline 112 at about eight o'clock will align with its closest slot 122. Correspondingly, as is clear from Fig. 7a, a counterclockwise rotation of 5,14 degrees will result in that the spline 112 at about four o'clock will align with its closest slot 122.

This means in practice, that when an angular play of 5,14 degrees or more exist for the rotational positions of the locking member 130, the locking member 130 will irrespective of a rotational position of the castellated nut 120 in relation to the shaft 110 when the castellated nut 120 is threaded onto the shaft 110, for at least one rotational position of the locking member 130, be slidable onto the shaft 110 such that the at least one radially inwardly extending protrusion 132 and the at least one radially outwardly extending protrusion 134 engage with the splines 112 and the crenellation slots 122, respectively, thereby providing the rotational locking of the castellated nut 130 in relation to the shaft 110.

To this end, the angular play may be attributable to a circumferential play or clearance between the at least one radially inwardly extending protrusion 132 and the splines 112 and/or to a circumferential play or clearance between the that the at least one radially outwardly extending protrusion 134 and the crenellation slots 112. In other words, the angular play may be attributable to a circumferential play or clearance between the at least one radially inwardly extending protrusion 132 and the splines 112, and to a circumferential play or clearance between the that the at least one radially outwardly extending protrusion 134 and the crenellation slots 122, either jointly or individually. In yet other words, the angular play may be attributable to a circumferential play or clearance between the that the at least one radially inwardly extending protrusion 132 and the splines 112, to a circumferential play or clearance between the that the at least one radially outwardly extending protrusion 134 and the crenellation slots 112, or to a combination of said circumferential plays or clearances.

In order to achieve a relevant or desired angular play of the above described kind, the at least one inwardly extending protrusion 132 may, as e.g. illustrated in Fig. 8, have a smaller circumferential dimension than the splines 112 such that an inner circumferential clearance IC is formed between the at least one inwardly extending protrusion 132 and the splines 112 when the at least one inwardly extending protrusion 132 engages the splines 112.

In order to achieve a relevant or desired angular play of the above described kind, the at least one outwardly extending protrusion 134 may, as e.g. illustrated in Fig. 8, have a smaller circumferential dimension than the crenellation slots 122 such that an outer circumferential clearance OC is formed between the at least one outwardly extending protrusion 134 and the crenellation slots 122 when the at least one outwardly extending protrusion 134 engages the crenellation slots 122.

However, in practice, in order to achieve a relevant or desired angular play of the above described kind (5,14 degrees or more for the 10/7 configuration), a combination of an inner circumferential clearance IC and an outer circumferential clearance OC jointly amounting to the relevant or desired angular play is typically desirable. This e.g. in order to avoid a too tight fit between the at least one inwardly extending protrusion 132 and the splines 112 as well as between the at least one outwardly extending protrusion 134 and the crenellation slots 122.

Further, it is to be noted that a configuration in which the nut 130 comprises seven slots 122 and the shaft 110 comprises ten splines 112 (a 7/10 configuration) the smallest angular displacement between a slot 122 and a spline 112 apart from an aligned slot 122 and spline 112 will also be 5,14 degrees. Thus, for any combination of slots 122 and splines 112 (a X/Y combination) if the number slots 122 and splines 112 flipped in the sense that a combination of a first number of splines 112 and a second number of slots 122 is replaced by the second number of splines 112 and the first number of slots 122 (a Y/X combination) the smallest angular displacement between a slot 122 and a spline 112 apart from an aligned slot 122 and spline 112 will be the same.

Now also referring to Fig. 4. Fig. 4 illustrates a nut connection arrangement 100 similar to the nut connection arrangements of Figs. 1-3 and 8. Given the similarities, mainly relevant differences will be described in the following. In Fig. 4, the nut 120 has ten slots 122 just like in Figs. 1-3 and 8. However, the shaft 110 of Fig. 4 has nine splines 112 as opposed to the shaft 110 of Figs. 1-3 and 8 which has seven splines 112. Hence, Fig. 4 represents a 10/9 configuration. The 10/9 configuration is further schematically represented in Fig. 7b. As is clear from Figs. 4 and 7b, the angular displacement between the slots 122 and the splines 112 is different compared to the above described 10/7 configuration of Fig. 7a. In Fig. 7b, the smallest angular displacement between a slot 122 and a spline 112 apart from the aligned slot 122 and spline 112 is 4 degrees.

As a result, when an angular play of 4 degrees or more exist for the rotational positions of the locking member 130 of Fig. 4, the locking member 130 will irrespective of a rotational position of the castellated nut 120 in relation to the shaft 110 when the castellated nut 120 is threaded onto the shaft 110, for at least one rotational position of the locking member 130, be slidable onto the shaft 110 such that the at least one radially inwardly extending protrusion 132 and the at least one radially outwardly extending protrusion 134 engage with the splines 112 and the crenellation slots 122, respectively, thereby providing a rotational locking of the castellated nut 130 in relation to the shaft 110.

Now also referring to Figs. 7c-7k. Each one of Figs. 7c-7k illustrates, like Figs. 7a and 7b, a respective schematic representation of a configuration of slots 122 and splines 112. Further, for each one of Figs. 7c-7k the number of slots 122 and the number of splines 112 are indicated at the top of the Fig. at hand. Moreover, each one of Figs. 7c-7k indicate the smallest angular displacement between a slot 122 and a spline 112 apart from the aligned slot 122 and spline 112 (at twelve o'clock).

In this regard, Fig. 7c illustrates a 8/9 configuration having a smallest angular displacement between a slot 122 and a spline 112 apart from the aligned slot 122 and spline 112 (twelve o'clock) of 5 degrees.

Fig. 7d illustrates a 8/11 configuration having a smallest angular displacement between a slot 122 and a spline 112 apart from the aligned slot 122 and spline 112 (twelve o'clock) of 4,09 degrees.

Fig. 7e illustrates a 6/11 configuration having a smallest angular displacement between a slot 122 and a spline 112 apart from the aligned slot 122 and spline 112 (twelve o'clock) of 5,45 degrees.

Fig. 7f illustrates a 7/9 configuration having a smallest angular displacement between a slot 122 and a spline 112 apart from the aligned slot 122 and spline 112 (twelve o'clock) of 5,71 degrees.

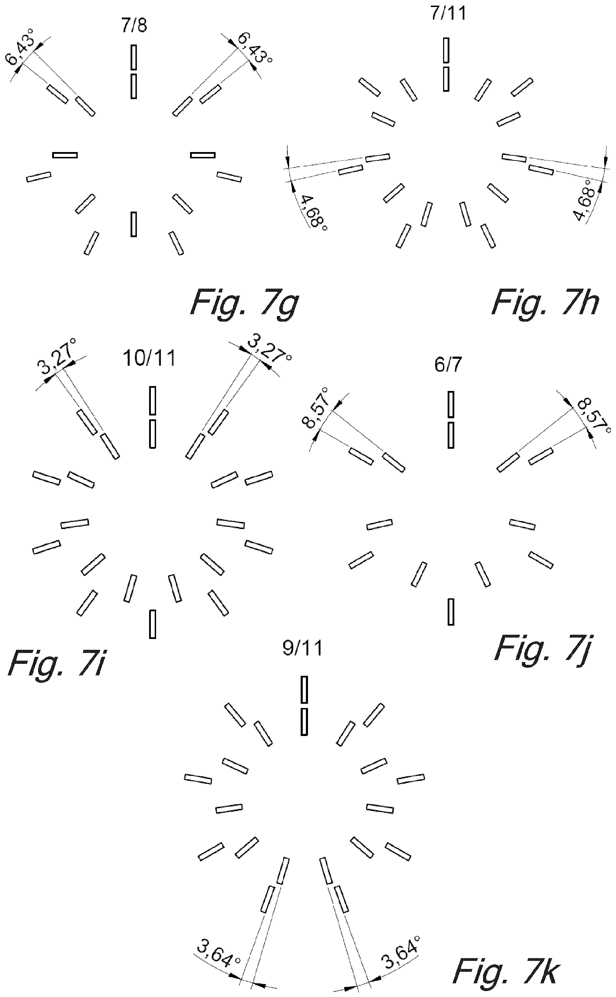

Fig. 7g illustrates a 7/8 configuration having a smallest angular displacement between a slot 122 and a spline 112 apart from the aligned slot 122 and spline 112 (twelve o'clock) of 6,43 degrees.

Fig. 7h illustrates a 7/11 configuration having a smallest angular displacement between a slot 122 and a spline 112 apart from the aligned slot 122 and spline 112 (twelve o'clock) of 4,68 degrees.

Fig. 7i illustrates a 10/11 configuration having a smallest angular displacement between a slot 122 and a spline 112 apart from the aligned slot 122 and spline 112 (twelve o'clock) of 3,27 degrees.

Fig. 7j illustrates a 6/7 configuration having a smallest angular displacement between a slot 122 and a spline 112 apart from the aligned slot 122 and spline 112 (twelve o'clock) of 8,57 degrees.

Fig. 7k illustrates a 9/11 configuration having a smallest angular displacement between a slot 122 and a spline 112 apart from the aligned slot 122 and spline 112 (twelve o'clock) of 3,64 degrees.

Given the above configurations of slots 122 and splines 112, an angular play associated with the at least one rotational position of the locking member 130 within a range of 3,5 to 9 degrees, such as 4 to 6 degrees, is generally relevant. In this regard, it is to be understood that the actual relevant angular play depends on the configuration of slots 122 and splines 112 at hand.

Now referring to Figs. 1 and 2. The nut connection arrangement 100 may, as depicted in Figs. 1 and 2, comprise a fixing member 140 configured to retain the locking member 130 in a position in which the at least one radially inwardly extending protrusion 132 and the at least one radially outwardly extending protrusion 134 engage with the splines 112 and the crenellation slots 122, respectively.

As illustrated in Figs. 1 and 2, the fixing member 140 comprise a locking ring 140 configured to engage a circumferentially extending groove 114 of the shaft 110.

Alternatively or additionally, the fixing member 140 may comprises a locking pin configured to engage a transversally extending bore or opening of the shaft 110.

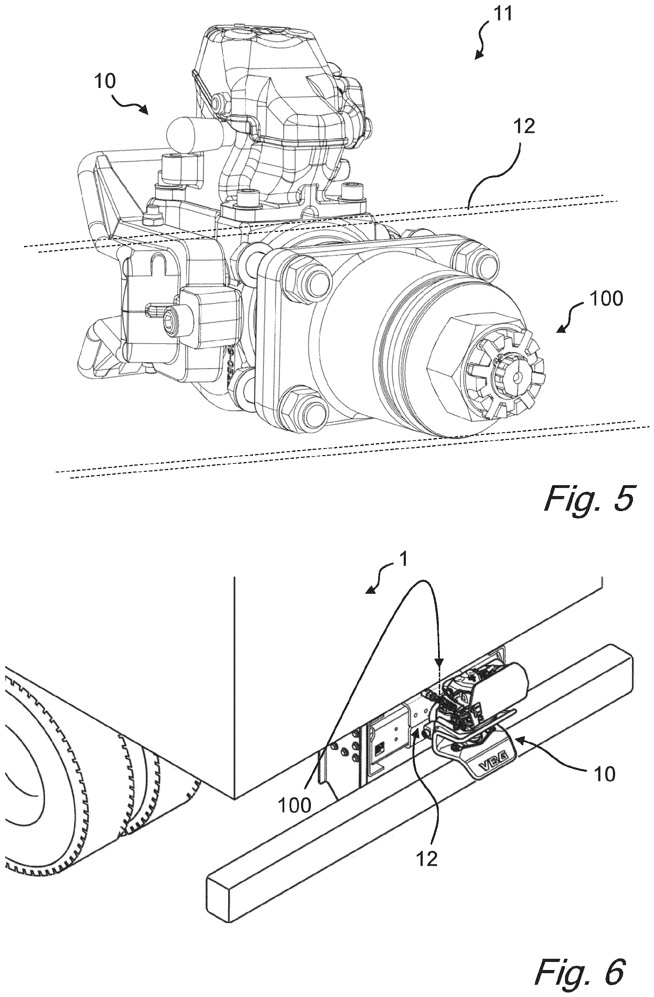

Now referring to Figs. 5 and 6. Fig. 5 illustrates a trailer coupling 10 including a nut connection arrangement 100. The nut connection arrangement 100 of Fig. 5 is of the type described above in conjunction to Figs. 1-3. Given this, details regarding the nut connection arrangement 100 of the truck coupling 10 will not be repeated to avoid undue repetition. The truck coupling 10 is a per se known truck coupling 10. Given this, details regarding the truck coupling 10 will not be given here. As is known in the art the truck coupling 10 may be used to connect a trailer, a dolly or similar to a truck 1 or another relevant towing vehicle.

The nut connection arrangement 100 of Fig. 5 may be used for connecting the truck coupling 10 to a truck 1, as schematically illustrated in Fig. 6.

The truck coupling 10 may be directly connected to the chassis or other structure of the truck 1 by means of the nut connection arrangement 100.

The truck coupling 10 may be connected to the chassis or other structure of the truck 1 by means of the nut connection arrangement 100 via a draw beam 12. In this regard, the draw beam 12 is typically connected to the chassis or other structure of the truck 1, i.e. as illustrated in Fig. 6. Thus, the draw beam 12 may be configured to be connected to the truck 1.

The truck coupling 10 may in turn connected to the draw beam 12. A portion of the draw beam 12 of Fig. 6 is schematically indicated in phantom in Fig. 5 to illustrate that the truck coupling 10 is connected to the draw beam 12 in such a way where the pulling force of the truck 1 is transferred to the truck coupling 10 via the nut connection arrangement 100. Such a connection between a draw beam 12 and a truck coupling 10 is known in the art and will not be discussed further detail here. It is however to be noted that the threaded axis 110 connected to the truck coupling 10 extends through an opening in the draw beam 12, such that a trailer of similar is pulled via the nut connection arrangement 100. The threaded axis 110 may be connected to the truck coupling 10 or may be an integral part of the truck coupling 10.

The draw beam 12 and the truck coupling 10 may when connected to each other jointly form a draw beam arrangement 11. Thus, a draw beam arrangement 11 may comprise a draw beam 12 configured to be connected to a truck 1, and a truck coupling 10, wherein the truck coupling 10 comprises a nut connection arrangement 100 connecting the truck coupling 10 to the draw beam 12.

Now referring to Fig. 9. Fig 9 is a flow chart of method 200 for rotationally locking a castellated nut 120 in relation to a threaded shaft 110 using a nut connection arrangement 100 of the above described kind.

The method 200 comprises, threading 202 the castellated nut 12 onto the shaft 110. In this way, the nut 120 may be positioned as intended in relation to the shaft 110. In this regard, the nut 120 may be positioned as intended in relation to the shaft 110 in the sense that the nut is in its intended position and is tightened with its intended rotational torque.

The method 200 proceeds by sliding 204 the locking member 130 onto the shaft 110 such that the at least one radially inwardly extending protrusion 132 and the at least one radially outwardly extending protrusion 134 engage with the splines 112 and the crenellation slots 122, respectively, thereby providing a rotational locking of the castellated nut 120 in relation to the shaft 110.

It will be appreciated that the present inventive concept is not limited to the variants and examples shown. Several modifications and variations are thus conceivable within the scope of the invention which thus is defined by the appended claims.

## Claims

1. A nut connection arrangement (100) comprising:
a threaded shaft (110) comprising a plurality of splines (112) extending along a longitudinal axis (LA) of the shaft (110),
a castellated nut (120) comprising a plurality of crenellation slots (122) and being configured to be threaded onto the shaft (110) from an end of the shaft (110), and
a locking member (130) comprising at least one radially inwardly extending protrusion (132) configured to engage a spline (112) in response to sliding the locking member onto the shaft (110) from the end of the shaft (110), and at least one radially outwardly extending protrusion (134) configured to engage a crenellation slot (122) in response to sliding the locking member (130) onto the shaft (110) from the end of the shaft (110) when the castellated nut (120) is threaded onto the shaft (110),
wherein a number and an angular distribution of the crenellation slots (122) and the splines (112) are such that, irrespective of a rotational position of the castellated nut (120) in relation to the shaft (110) when the castellated nut (120) is threaded onto the shaft (110), for at least one rotational position of the locking member (130), the locking member (130) is slidable onto the shaft (110) such that the at least one radially inwardly extending protrusion (132) and the at least one radially outwardly extending protrusion (134) engage with the splines (112) and the crenellation slots (122), respectively, thereby providing a rotational locking of the castellated nut (130) in relation to the shaft (110).

2. The nut connection arrangement (100) according to claim 1, wherein the number of the crenellation slots (122) is not evenly divisible by the number of splines (112).

3. The nut connection arrangement (100) according to claim 1 or 2, wherein the plurality of crenellation slots (122) are evenly distributed about a circumference of the castellated nut (120), and wherein the plurality of splines (112) are evenly distributed about a circumference of the shaft (110).

4. The nut connection arrangement (100) according to any one of the preceding claims, wherein the at least one rotational position of the locking member (130) is associated with an angular play within a range of 3,5 to 9 degrees, such as 4 to 6 degrees.

5. The nut connection arrangement (100) according to any one of the preceding claims, wherein the at least one inwardly extending protrusion (132) has a smaller circumferential dimension than the splines (112) such that an inner circumferential clearance (IC) is formed between the at least one inwardly extending protrusion (132) and the splines (112) when the at least one inwardly extending protrusion (132) engages the splines (112), and/or
wherein the at least one outwardly extending protrusion (134) has a smaller circumferential dimension than the crenellation slots (122) such that an outer circumferential clearance (OC) is formed between the at least one outwardly extending protrusion (134) and the crenellation slots (122) when the at least one outwardly extending protrusion (134) engages the crenellation slots (122).

6. The nut connection arrangement (100) according to any one of the preceding claims, wherein the at least one radially inwardly extending protrusion (132) comprises a plurality of inwardly extending protrusions (132), and wherein the at least one radially outwardly extending protrusion (134) comprises a plurality of outwardly extending protrusions (134).

7. The nut connection arrangement (100) according to any one of the preceding claims, wherein a number of the at least one radially inwardly extending protrusion (132) equals to the number of the plurality of splines (112).

8. The nut connection arrangement (100) according to any one of the preceding claims, wherein a number of the at least one radially outwardly extending protrusion (134) equals to the number of the plurality of crenellation slots (122).

9. The nut connection arrangement (100) according to any one of the preceding claims, wherein the shaft (110) comprises seven splines (112) and the castellated nut (120) comprises ten crenellation slots (122), or wherein the shaft (110) comprises ten splines (112) and the castellated nut (120) comprises seven crenelation slots (122), or wherein the shaft (110) comprises nine splines (112) and the castellated nut (120) comprises ten crenellation slots (122), or wherein the shaft (110) comprises ten splines (112) and the castellated nut (120) comprises nine crenelation slots (122), or wherein the shaft (110) comprises nine splines (112) and the castellated nut (120) comprises eight crenellation slots (122), or wherein the shaft (110) comprises eight splines (112) and the castellated nut (120) comprises nine crenellation slots (122), or wherein the shaft (110) comprises eleven splines (112) and the castellated nut (120) comprises eight crenellation slots (122), or wherein the shaft (110) comprises eight splines (112) and the castellated nut (120) comprises eleven crenellation slots (122), or wherein the shaft (110) comprises eleven splines (112) and the castellated nut (120) comprises six crenellation slots (122), or wherein the shaft (110) comprises six splines (112) and the castellated nut (120) comprises eleven crenellation slots (122), or wherein the shaft (110) comprises nine splines (112) and the castellated nut (120) comprises seven crenellation slots (122), or wherein the shaft (110) comprises seven splines (112) and the castellated nut (120) comprises nine crenellation slots (122), or wherein the shaft (110) comprises eight splines (112) and the castellated nut (120) comprises seven crenellation slots (122), or wherein the shaft (110) comprises seven splines (112) and the castellated nut (120) comprises eight crenellation slots (122), or wherein the shaft (110) comprises eleven splines (112) and the castellated nut (120) comprises seven crenellation slots (122), or wherein the shaft (110) comprises seven splines (112) and the castellated nut (120) comprises eleven crenellation slots (122), or wherein the shaft (110) comprises eleven splines (112) and the castellated nut (120) comprises ten crenellation slots (122), or wherein the shaft (110) comprises ten splines (112) and the castellated nut (120) comprises eleven crenellation slots (122), or wherein the shaft (110) comprises seven splines (112) and the castellated nut (120) comprises six crenellation slots (122), or wherein the shaft (110) comprises six splines (112) and the castellated nut (120) comprises seven crenellation slots (122), or wherein the shaft (110) comprises eleven splines (112) and the castellated nut (120) comprises nine crenellation slots (122), or wherein the shaft (110) comprises nine splines (112) and the castellated nut (120) comprises eleven crenellation slots (122).

10. The nut connection arrangement (100) according to any one of the preceding claims, further comprising a fixing member (140) configured to retain the locking member (130) in a position in which the at least one radially inwardly extending protrusion (132) and the at least one radially outwardly extending protrusion (134) engage with the splines (112) and the crenellation slots (122), respectively.

11. The nut connection arrangement according to claim 10, wherein the fixing member (140) comprises a locking ring (140) configured to engage a circumferentially extending groove (114) of the shaft (110), or wherein the fixing member (140) comprises a locking pin configured to engage a transversally extending bore of the shaft (110).

12. A truck coupling (10), wherein the truck coupling (10) comprises a nut connection arrangement (100) according to any one of the preceding claims for connecting the truck coupling (10) to a truck (1).

13. A draw beam arrangement (11) comprising:
a draw beam (12) configured to be connected to a truck (1), and
a truck coupling (10), wherein the truck coupling (10) comprises a nut connection arrangement (100) according to any one of claims 1-11 connecting the truck coupling (10) to the draw beam (12).

14. A truck (1) comprising a truck coupling (10) according to claim 12 or a draw beam arrangement (11) according to claim 13.

15. A method (200) for rotationally locking a castellated nut (120) in relation to a threaded shaft (110) using a nut connection arrangement (100) according to any one of claims 1-11, the method comprising:
threading (202) the castellated nut (120) onto the shaft (110), and
sliding (204) the locking member (130) onto the shaft (110) such that the at least one radially inwardly extending protrusion (132) and the at least one radially outwardly extending protrusion (134) engage with the splines (112) and the crenellation slots (122), respectively, thereby providing a rotational locking of the castellated nut (120) in relation to the shaft (110).
